# EUROPÄISCHE PATENTANMELDUNG

(11) **EP 0 794 088 A1**
(43) Veröffentlichungstag der Anmeldung: **10.09.1997**
(21) Anmeldenummer: 96810138.6
(22) Anmeldetag: 07.03.1996
(51) Int. Cl.: B60R 9/04

(54) **Fuss zur Befestigung einer Dachreling**

(71) Anmelder: Alusuisse Technology & Management AG, 8212 Neuhausen am Rheinfall (CH)
(72) Erfinder: Herz, Erich, D-78224 Singen (DE)

(57) **Zusammenfassung**

Bei einem Fuss zur Befestigung einer Dachreling (10) an einem Fahrzeug, insbesondere an einem Personenkraftwagen, Transporter oder dgl. Nutzfahrzeug, ist ein in montierter Lage einer Dachhaut (12) aufliegendes Tragteil (18) mit einer Aussenhaut (24) aus Kunststoff umhüllt und ein vom Tragteil (18) und der Aussenhaut (24) begrenzter Zwischenraum (26) mit einem leichtgewichtigen Material ausgefüllt.

Neben einem geringen Gewicht bietet der Fuss den weiteren Vorteil, dass ein einziges Tragteil für verschiedene Gestaltungsformen des Fusses verwendet werden kann.

## Beschreibung

Die Erfindung betrifft einen Fuss zur Befestigung einer Dachreling an einem Fahrzeug, insbesondere an einem Personenkraftwagen, Transporter oder dgl. Nutzfahrzeug, mit einem in montierter Lage einer Dachhaut aufliegenden Tragteil.

Die äussere Gestalt eines zur Befestigung einer Dachreling eingesetzten Fusses wird dem Design des Daches bzw. der gesamten Karosserie des Fahrzeuges angepasst. Dies hat zur Folge, dass praktisch für jede Fahrzeugmodellreihe ein speziell angepasster Fuss hergestellt werden muss, was insbesondere bei Ausführungen aus Metall zu erheblichen Kosten führt. Hinzu kommt der den herkömmlichen Füssen anhaftende Nachteil eines verhältnismässig hohen Gewichts.

Angesichts dieser Gegebenheiten hat sich der Erfinder die Aufgabe gestellt, einen Fuss für eine Dachreling der eingangs erwähnten Art zu schaffen, dessen äussere Gestalt auf einfache und kostengünstige Weise dem Dach- bzw. Karosseriedesign eines Fahrzeuges angepasst werden kann. Gleichzeitig soll eine möglichst hohe Gewichtsreduktion erzielt werden können.

Zur erfindungsgemässen Lösung der Aufgabe führt, dass das Tragteil mit einer Aussenhaut aus Kunststoff umhüllt und ein vom Tragteil und der Aussenhaut begrenzter Zwischenraum mit einen leichtgewichtigen Material ausgefüllt ist.

Beim erfindungsgemässen Fuss ergibt sich die äussere Gestalt aus der Form der Kunststoffaussenhaut, die beispielsweise als Spritzgussteil kostengünstig herstellbar ist. Das von aussen nicht mehr sichtbare Tragteil übernimmt allein noch die Funktion der Fussbefestigung an der Dachhaut sowie als Uebergangsstück zur Dachreling. Damit kann unabhängig vom endgültigen Design eines Dachrelingfusses ein einheitliches Tragteil für verschiedene Karosserietypen verwendet werden. Durch die Ausschäumung des Zwischenraumes mit Kunststoff ergibt sich ein leichgewichtiger Fuss mit hoher Formstabilität.

Die Aussenhaut kann über eine angeformte Dichtlippe als allseitig geschlossene Hülle ausgestaltet sein. Im Bereich eines Anschlusszapfens für die Dachreling liegt die Aussenhaut dem Tragteil vorzugsweise dicht an. Zur Festlegung des Fusses auf der Dachhaut können zudem im Fussteil Befestigungsbolzen integriert sein.

Ein wesentlicher Vorteil der erfindungsgemässen Ausgestaltung eines Dachrelingfusses wird darin gesehen, dass insbesondere eine kostenintensive Nachbearbeitung und Oberflächenbehandlung, die bei herkömmlichen Füssen aus Metall erforderlich ist, entfällt. Durch die Wahl eines geeigneten Kunststoffes, der ggf. entsprechend der Farbe des Karosserielackes eingefärbt sein kann, ist eine Nachbearbeitung der beispielsweise im Spritzgussverfahren hergestellten Aussenhaut nicht mehr erforderlich.

Eine kostengünstige Herstellung des Fussteils ergibt sich durch die Formung des Tragteils als Schmiedeteil aus Aluminium. Das Tragteil kann jedoch auch im Kokillengiess-, Druckgiess-, Vakuumdruckgiess- oder einem andern Giessverfahren hergestellt werden. Geeignete Herstellungsverfahren sind auch Thixocasting und Thixoschmieden. Denkbar ist auch die Herstellung eines Strangpressprofils, dessen Querschnitt dem Tragteilquerschnitt entspricht. Die einzelnen Tragteile werden sodann durch Strangpressabschnitte gebildet. Als Werkstoffe können neben Aluminium auch Magnesium, Zink, Kunststoffe, ggf. mit Metall- oder Glasfaserverstärkung, sowie weitere im Fahrzeugbau üblicherweise verwendete Materialien eingesetzt werden.

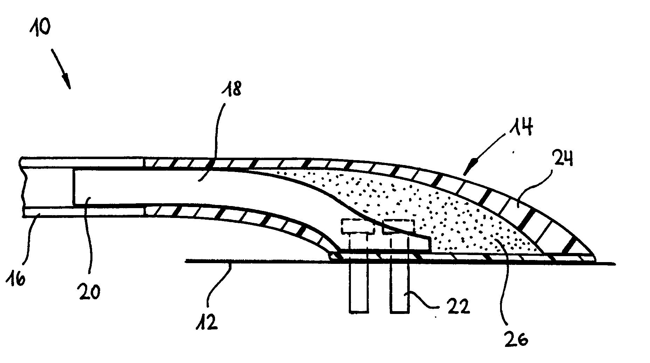

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in ihrer einzigen Figur einen Längsschnitt durch den Fuss einer Dachreling.

Eine in der Zeichnung nur teilweise dargestellte Dachreling 10 für einen Personenkraftwagen weist einen einer Dachhaut 12 aufliegenden Fuss 14 auf. Der Fuss 14 besteht aus einem eigentlichen Tragteil 18 mit einem an diesem angeformten Zapfen 20, der von einem Profilstab 16 als Teil der Dachreling 10 übergriffen ist. Im Tragteil 18 sind Befestigungsbolzen 22 zur Befestigung des Fusses 14 an der Dachhaut 12 integriert.

Das beispielsweise als geschmiedetes Aluminiumteil gefertigte Tragteil 18 ist von einer die äussere Gestalt des Fusses 14 bestimmenden Aussenhaut 24 aus Kunststoff umgeben. Die Herstellung der Aussenhaut 24 erfolgt beispielsweise im Spritzgiessverfahren.

Der Zwischenraum zwischen der Aussenhaut 24 und dem Tragteil 18 ist mit einer Füllmasse 26 aus Kunststoff ausgeschäumt. Dies führt einerseits zu einer bedeutenden Gewichtsreduktion und verleiht andererseits der Aussenhaut 24 eine erhöhte Formstabilität.

Eine zwischen Fuss 14 und Dachhaut 12 angeordnete Dichtlippe 28 kann beispielsweise im Spritzgiessverfahren integral an die Aussenhaut 24 angeformt sein.

## Patentansprüche

1. Fuss zur Befestigung einer Dachreling (10) an einem Fahrzeug, insbesondere an einem Personenkraftwagen, Transporter oder dgl. Nutzfahrzeug, mit einem in montierter Lage einer Dachhaut (12) aufliegenden Tragteil,
dadurch gekennzeichnet, dass
das Tragteil (18) mit einer Aussenhaut (24) aus Kunststoff umhüllt und ein vom Tragteil (18) und der Aussenhaut (24) begrenzter Zwischenraum (26) mit einem leichtgewichtigen Material ausgefüllt ist.

2. Fuss nach Anspruch 1, dadurch gekennzeichnet, dass der Zwischenraum (26) mit Kunststoff ausgeschäumt ist.

3. Fuss nach Anspruch 1 oder 2, dadurch gekennzeichnet, dass die Aussenhaut (26) über eine angeformte Dichtlippe (28) als allseitig geschlossene Hülle ausgestaltet ist.

4. Fuss nach einem der Ansprüche 1 bis 3, dadurch gekennzeichnet, dass die Aussenhaut (24) dem Tragteil (18) im Bereich eines Anschlusszapfens (20) für die Dachreling (10) dicht anliegt.

5. Fuss nach einem der Ansprüche 1 bis 4, dadurch gekennzeichnet, dass im Tragteil (18) Befestigungsbolzen (22) zur Festlegung des Fusses (14) auf der Dachhaut (12) integriert sind.

6. Fuss nach einem der Ansprüche 1 bis 5, dadurch gekennzeichnet, dass das Tragteil (18) als Schmiede- bzw. Thixoschmiede-, Druckguss-, Vakuumdruckguss-, Kokillenguss-, Thixocastingteil oder als Abschnitt eines Strangpressprofils aus Aluminium, Magnesium, Zink oder Kunststoff, ggf. mit Metall- oder Glasfaserverstärkung, geformt ist.
